# EUROPÄISCHE PATENTSCHRIFT

(11) **EP 2 702 131 B1**
(45) Veröffentlichungstag und Bekanntmachung des Hinweises auf die Patenterteilung: **30.05.2018**
(21) Anmeldenummer: 12717053.8
(22) Anmeldetag: 16.04.2012
(51) Int. Cl.: C12C 7/17

(54) **Läuterbottich**
Lauter tun
Cuve de clarification

(30) Priorität: 29.04.2011 DE 102011075027
(43) Veröffentlichungstag der Anmeldung: 05.03.2014
(73) Patentinhaber: Krones AG, 93073 Neutraubling (DE)
(72) Erfinder: GRUBER, Robert, 93073 Neutraubling (DE); WURM, Maren, 93073 Neutraubling (DE); LÖFFLAD, Jochen, 93073 Neutraubling (DE)
(74) Vertreter: Grünecker Patent- und Rechtsanwälte PartG mbB
(86) Internationale Anmeldenummer: PCT/EP2012/001653
(87) Internationale Veröffentlichungsnummer: WO 2012/146354

(56) Entgegenhaltungen:
- CH-A- 6 700
- CH-A- 248 471
- DE-A1- 3 707 076
- US-A- 2 014 945
- US-A- 2 513 765
- US-A- 3 858 855

## Beschreibung

Die Erfindung bezieht sich auf einen Läuterbottich mit einer Aufhackvorrichtung der im Oberbegriff von Anspruch 1 erläuterten Art.

Ein derartiger Läuterbottich ist aus der DE 637 376 bekannt. Läuterbottiche dienen zur Fest/Flüssig-Trennung der Maische, wobei die festen Bestandteile, die Treber, aus der Maische abgetrennt und anderen Verwendungszwecken zugeführt werden. Die flüssige Phase, die Würze, wird dabei abgetrennt und im Anschluss in der Würzepfanne mit Zugabe von Hopfen gekocht. Der Läuterprozess erfolgt bevorzugt in zwei Schritten. Im ersten Schritt wird die Vorderwürze abgezogen, d. h. man lässt die Flüssigkeit der im Läuterbottich befindliche Maische ablaufen, wobei die Festbestandteile, wie beispielsweise Spelzen, nach dem Ablagern auf dem Senkboden des Läuterbottichs als Filterschicht wirken, der die Trubstoffe aus der Flüssigphase zurückhält. Ziel ist es, eine möglichst blanke, feststofffreie Würze zu erhalten. Um möglichst wenig Extrakt in den Trebern zurück zu lassen, muss im Anschluss in einem zweiten Schritt der noch in dem Treberkuchen verbliebene Extrakt mit Wasser (Anschwänzwasser) ausgewaschen werden. Unter dem sogenannten Senkboden versteht man einen zusätzlichen, in mehrere Segmente unterteilten, einlegbaren Boden, der über dem eigentlichen Bottichboden angeordnet ist. Die einzelnen Segmente weisen Schlitze auf. Somit dient der Senkboden als Stütze für die "natürliche" Filterschicht (Treberkuchen) und ermöglicht durch seine freie Durchgangsfläche das Ablaufen der Würze. Im Verlaufe des Läuterprozesses verdichtet sich der Treberkuchen, so dass die Durchflussgeschwindigkeit der ablaufenden flüssigen Phase (Vorderwürze, Nachgüsse) verringert wird. Der bekannte Läuterbottich ist deshalb mit einer Aufhackvorrichtung versehen, die eine Mehrzahl von messerartigen Aufhackwerkzeugen enthält, die jeweils an einem Aufhackarm befestigt sind. Die Aufhackarme rotieren um eine im Wesentlichen vertikale und in der Längsmittellinie des rund ausgebildeten Läuterbottichs vorgesehene Drehachse mit vorbestimmter Geschwindigkeit, so dass die Aufhackwerkzeuge den Treberkuchen im Wesentlichen vertikal durchschneiden. Beim bekannten Läuterbottich werden zusätzlich Aufhackwerkzeuge eingesetzt, die ein Zerteilen des Treberkuchens in horizontaler Richtung bewirken sollen. Als Aufhackwerkzeuge werden feine Drähte oder dünne Metallbänder verwendet, die vor- oder nachlaufend an den Aufhackmessern befestigt werden und sich quer zu diesen erstrecken. Ziel dieser Aufhackwerkzeuge ist es, den Treberkuchen nicht nur vertikal, sondern, nach Art einer Käseharfe, auch horizontal zu durchschneiden. Durch die Drähte und dünnen Metallbänder konnte jedoch nicht die gewünschte Auflockerung bewirkt werden. Die sich bei diesem reinen Durchschneiden des Treberkuchens bildenden Kanäle, sowohl die vertikalen als auch die horizontalen, wirken vielmehr als Drainage, die zwar die Durchflussgeschwindigkeit erhöht, dies aber auf Kosten der Extraktausbeute, da die Flüssigkeit den Weg des geringsten Widerstandes durch die Kanäle wählt.

Es hat in der Vergangenheit nicht an weiteren Versuchen gefehlt, die Aufhack- und Auflockerungsleistung zu verbessern.

So zeigt das DE-GM 76 09 309 eine Aufhackvorrichtung, die sowohl zum Aufhacken als auch zum Ausschieben des Treberkuchens nach Beendigung des Abläutervorganges eingesetzt werden kann. Zu diesem Zweck ist am Aufhackmesser eine schwenkbare Leiste derart angebracht, dass sie sich beim Drehen des Aufhackmessers in Aufhackrichtung während des Abläutervorganges in einem Winkel zum Boden stellt und bei Drehen des Aufhackmessers in Gegenrichtung während des Austrebervorganges zum Ausschieben der Treber an das Aufhackmesser senkrecht anlehnt. Die Leiste ist jedoch am unteren Ende des Aufhackmessers angeordnet und reicht in den Zwischenraum zwischen dem bodennahen Ende und dem Senkboden, um das Austrebern effektiver zu gestalten. Darüber hinaus muss die Leiste für den Austrebervorgang mechanisch stabil ausgebildet sein und hinterlässt somit während des Abläutervorganges besonders breite Kanäle, die eine besonders starke ungewünschte Entwässerungswirkung entfalten. Da die schwenkbare Leiste im unteren Bereich der Aufhackmesser angeordnet ist, ergibt sich nur eine räumlich begrenzte Bearbeitungsfläche. Um den gesamten Treberkuchen zu erfassen, müsste die Aufhackvorrichtung ständig mittels der Hubvorrichtung nach oben und unten durch den Treberkuchen gefahren werden. Dies stellt besonders hohe Anforderungen an die gesamte Mechanik sowie das Getriebe der Aufhackvorrichtung. Außerdem besteht die Gefahr, dass der Senkboden beschädigt wird, wenn die Aufhackvorrichtung versehentlich zu weit nach unten gefahren wird.

Die EP-A-0 750 036 beschreibt eine Aufhackvorrichtung für einen Läuterbottich mit einer Mehrzahl von Aufhackmessern, an denen in Bewegungsrichtung beim Aufhacken an der hinteren Seite Wendepaddel vorgesehen sind, die dazu dienen, den Treberkuchen zumindest teilweise zu wenden. Dadurch wird ein Umschichten und Umwenden des Treberkuchens bewirkt, was sich auch seitlich auf die Bereiche zwischen den Aufhackmessern auswirken soll. Durch die Gestaltung der Wendepaddel wird jedoch nur ein räumlich eng begrenzter Bereich bearbeitet. Nachteilig an dieser Konstruktion ist auch, dass sich kein horizontal durchgehender aufgelockerter Bereich bildet, der die Strömungsgeschwindigkeit der flüssigen Phase durch den Treberkuchen über den gesamten Querschnitt des Treberkuchens konstant beeinflusst.

In der US 2 014 945 A wird ein Läuterbottich mit einer Aufhackvorrichtung beschrieben, die Aufhackwerkzeuge aufweist, die horizontal durch eine Treberkuchen bewegbar sind, um so vertikale Schnitte in den Treberkuchen zu erzeugen. Zudem weist die Aufhackvorrichtung eine Auflockerungseinheit mit einer Leiste auf.

Der Erfindung liegt somit die Aufgabe zugrunde, einen Läuterbottich mit einer Aufhackvorrichtung bereitzustellen, die ohne Qualitätsverlust eine erhöhte Abläuterleistung gestattet.

Die Aufgabe wird durch die im Anspruch 1 angegebenen Merkmale gelöst. Von besonderem Vorteil ist es, dass die Leitleiste der Auflockerungseinrichtung in ihrer Längserstreckung in einem Winkel zum Boden angeordnet ist, sie also mit einer bestimmten Schrägstellung an der Aufhackvorrichtung angebracht ist. Dadurch wird die Höhe der aufgelockerten Schicht stark vergrößert. Durch die Schrägstellung wird weiterhin die Reinigung erleichtert, da sich an den schrägen Flächen kaum Treber festsetzen können.

Durch die erfindungsgemäße Ausgestaltung wird durch die Leitleiste der Auflockerungseinrichtung eine im Wesentlichen horizontale Auflockerungsschicht erzeugt, die zwar einen geringeren Durchflusswiderstand bietet, jedoch ihre Funktion als Filterschicht nicht verloren hat. Durch ihre Form wird der Treber durch die Bewegung der erfindungsgemäßen Leitleiste durch den Treberkuchen nicht verdichtet und nicht geschoben, sondern in eine Aufwärtsbewegung gezwungen, wobei der Weg des Trebers oberhalb der Leitleiste länger ist als unterhalb der Leitleiste, so dass eine wirksame Auflockerung stattfindet. Gleichzeitig wird der durch das Aufhackwerkzeug erzeugte vertikale Kanal unterbrochen, so dass sich für Wasser/die flüssige Phase kein direkter Weg von der Oberseite des Treberkuchens zum Senkboden des Läuterbottichs öffnet bzw. ein solcher nach kurzer Zeit wieder verschlossen wird. Dadurch kann der Läuterbottich wesentlich effektiver betrieben werden, und die Abläutergeschwindigkeit, sowohl durch eine Erhöhung des Durchsatzes als auch der Aufhackgeschwindigkeit ohne Qualitätseinbußen (z. B. Trübungen, Feststoffe) und mit verbesserter Extraktausbeute, erhöht werden.

Vorteilhafte Weiterbildungen der Erfindung sind den Unteransprüchen zu entnehmen.

Die Auflockerungswirkung der Leitleiste wird noch dadurch verbessert, dass ihre Querschnittsform in mindestens zwei interschiedlichen Winkeln zum Senkboden verläuft.

Wird die in Bewegungsrichtung vorlaufende Kante der Querschnittsform abgeschrägt, so wird einerseits ein Eindringen in den Treberkuchen verbessert und andererseits der Wegunterschied zwischen der Ober- und der Unterseite nochmals vergrößert.

Die nachlaufende Anordnung der Leitleiste im Abstand zu den Aufhackwerkzeugen verbessert die Bewegungsmöglichkeiten für die Treber weiter. Ein "Schieben" der Treber durch die Aufhackvorrichtung wird durch die nachlaufende Anordnung effektiv verhindert. Des Weiteren wird der durch das Aufhackwerkzeug entstandene Kanal bereits kurz nach seiner Entstehung wieder geschlossen.

Bevorzugt enthält die Auflockerungseinrichtung eine Mehrzahl in einem Abstand zueinander angeordneter Leitleisten, die die Ausbildung einer lockeren, horizontalen Schicht verbessert.

Noch weiter verbessert wird die Ausbildung einer horizontalen Auflockerungsschicht durch die Anordnung von Leitleisten mit entgegengesetzter Schräglage zum Boden an jeweils unterschiedlichen Aufhackarmen. Dadurch wird der Treberkuchen in Form eines Andreaskreuzes durchschnitten, so dass keinerlei Toträume, d. h. unbehandelte Bereiche innerhalb des Treberkuchens, verbleiben.

Die Leitleisten können vom bodennahen Ende der Aufhackwerkzeuge bis zur Oberfläche des Treberkuchens verlaufen, so dass im Wesentlichen der gesamte Treberkuchen durchgearbeitet wird. Je nach Länge der Leitleisten einerseits und der Höhenstellung der Aufhackvorrichtung andererseits können die Leitleisten auch über die Treberoberfläche hinausstehen.

Der Verbleib von nicht durchgearbeiteten Stellen wird weiter reduziert, wenn sich die Leitleisten in vertikaler Richtung überlappen.

Die Anzahl und Anordnung der Leitleiste(n) kann zum Optimieren des Ergebnisses in unterschiedlichen Weise konstruktiv gelöst werden.

Ein Verbesserungseffekt im Hinblick auf die Auflockerung ist selbst dann gegeben, wenn die Auflockerungseinrichtung wenigstens eine schräg zum Boden angestellte Leitleiste beliebigen Querschnitts und in beliebigen Abständen zum bodennahen Ende des Auflockerungswerkzeugs aufweist.

Die erfindungsgemäße Auflockerungsvorrichtung eignet sich auch zur Nachrüstung bestehender Läuterbottiche.

Ein Ausführungsbeispiel der Erfindung wird nachfolgend anhand der Zeichnungen näher erläutert. Es zeigen:
- Fig. 1: eine schematische Darstellung eines Längsschnittes durch einen Läuterbottich,
- Fig. 2: eine vergrößerte Darstellung der Querschnittsform einer Leitleiste,
- Fig. 3: eine Draufsicht auf einen Teil eines Aufhackarmes mit einem Teil einer Auflockerungseinrichtung,
- Fig. 4: eine Abwandlung der Auflockerungsvorrichtung gemäß Fig. 3,
- Fig. 5: eine perspektivische, herausvergrößerte Darstellung einer sich über mehrere Aufhackwerkzeuge erstreckenden Leitleiste,
- Fig. 6: die Ausbildung sich überlappender Ringkanäle über den zeitlichen Verlauf eines Abläuterprozesses im Schnittbild und
- Fig. 7: ein Treberkuchenprofil.

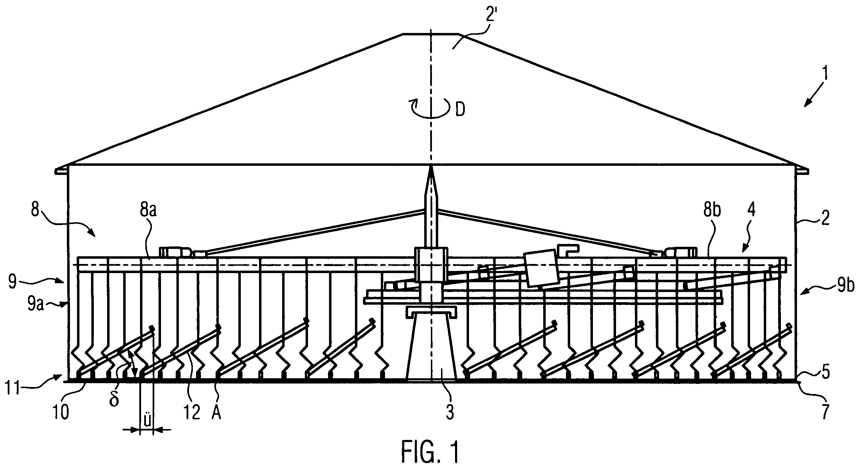

Fig. 1 zeigt in stark schematisierter Darstellung einen Läuterbottich 1 in Längsschnitt. Der Läuterbottich 1 enthält ein im Wesentlichen zylindrisches Gehäuse 2 zum Aufnehmen von Maische, in dessen senkrechter Mittellinie 2' eine Antriebswelle 3 angeordnet ist, um die sich eine Aufhackvorrichtung 4 angetrieben dreht. Darüber hinaus ist die Aufhackvorrichtung 4 aufgrund einer nicht dargestellten Hubvorrichtung während des laufenden Betriebes auch in ihrer Höhe verstellbar.

Das Gehäuse 2 enthält einen sogenannten Senkboden 5, der im Abstand oberhalb eines Sammelraums 7 angeordnet ist, in dem sich die aus der Maische ablaufende und durch das Anschwänzwasser ausgewaschene, extrakthaltige flüssige Phase (Läuterwürze) für die weitere Bierherstellung sammelt und abgezogen werden kann.

Die Aufhackvorrichtung 4 enthält in üblicher Weise wenigstens einen, bevorzugt mehrere Aufhackarme 8, von denen hier lediglich zwei sich radial bezüglich der Mittellinie 2' gegenüberliegende Aufhackarme 8a und 8b dargestellt sind. Die Aufhackarme 8a, 8b sind oberhalb der maximalen Höhe eines sich auf dem Senkboden 5 beim Abläutern vorhandenen Treberkuchens angeordnet und verlaufen im Wesentlichen radial zur Drehachse 2'. Jeder Aufhackarm 8a, 8b trägt wenigstens ein, bevorzugt mehrere Aufhackwerkzeugen 9a, 9b, die vom jeweiligen Aufhackarm 8a, 8b im Wesentlichen senkrecht nach unten führen. Das untere Ende (E) der Aufhackwerkzeuge 9a, 9b kann jedoch auch durch den tiefsten Punkt von zusätzlichen Aufhackhilfen, z. B. einem der üblichen Aufhackschuhe 10 gebildet sein. Bei tiefster Position der Aufhackvorrichtung 4 entspricht der tiefste Punkt einer Position knapp oberhalb des Senkbodens 5.

Die Aufhackwerkzeuge 9 können weiterhin mit den üblichen Abwinkelungen versehen und messerartig ausgebildet sein. Die Aufhackwerkzeuge 9 können für beide Arme 8a, 8b identisch ausgebildet und identisch angeordnet sein. Es ist jedoch auch möglich die Aufhackarme 8 mit unterschiedlichen Aufhackwerkzeugen auszurüsten oder die Aufhackwerkzeuge 9 auf nacheinander laufenden Aufhackarmen 8 versetzt anzuordnen.

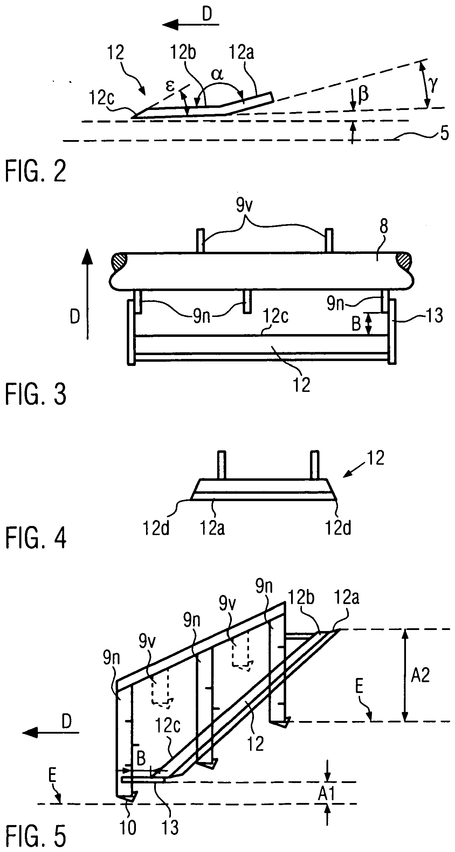

In einer Ausführung, wie in Fig. 3 ersichtlich, können die Aufhackwerkzeuge als in Drehrichtung der Aufhackvorrichtung 4 vorauseilende 9v oder nacheilende 9n Aufhackwerkzeuge unterteilt werden. Dabei wechseln sich üblicherweise jeweils vorauseilende 9v und nacheilende 9n Aufhackwerkzeuge ab. Die Leitleisten 12 werden bei der vorliegenden Erfindung grundsätzlich nur an den nacheilenden Aufhackwerkzeugen 9n angebracht/montiert. Aufgrund dieser Konstruktion können die Leitleisten 12 ihre erfindungsgemäße Aufgabe in besonders bevorzugter Weise erfüllen, da alle durch die Aufhackwerkzeuge gebildeten vertikalen Kanäle effektiv unterbrochen werden.

Die Aufhackwerkzeuge 9v und 9n können einen gleichmäßigen Abstand zueinander aufweisen, der je nach Aufhackvorrichtung 4 etwas variieren kann. Die Leitleisten 12 können bevorzugt an zwei oder drei (nacheilenden) Aufhackwerkzeugen 9n montiert werden. Aufgrund dieser Konstruktion ergeben sich die im Folgenden beschriebenen typischen Längen für die Leitleisten 12. Werden die Leitleisten 12 über eine Länge von vier oder mehr benachbarten, nacheilenden Aufhackwerkzeugen 9n installiert, ergibt sich zwangsweise eine größere Länge für die jeweilige Leitleiste 12. Die erfindungsgemäßen Vorteile ergeben sich insbesondere für die Leitleisten 12, welche an zwei oder drei benachbarten, nacheilenden Aufhackwerkzeugen 9n montiert sind. Die nacheilenden Aufhackwerkzeuge 9n können alle die gleiche Länge aufweisen, und die vorauseilenden Aufhackwerkzeuge 9v können alle die gleiche Länge aufweisen.

Der Aufhackvorrichtung 4 ist eine Auflockerungseinrichtung 11 zugeordnet. Die Auflockerungseinrichtung 11 erstreckt sich im Wesentlichen über die gesamte Radialerstreckung des Gehäuses 2 von der oder aus der Nähe der Längsmittellinie 2' bis zur Umfangswandung, und zwar derart, dass eine im Wesentlichen horizontale Schicht mit einer durch die Konstruktion der Auflockerungseinrichtung 11 bestimmten vertikalen Höhe in Richtung der Längsmittellinie 2' durchgearbeitet wird. Zu diesem Zweck ist es möglich, eine Leitleiste 12 so anzuordnen, dass diese die gesamte Radialstreckung abdeckt. Es können aber auch mehrere einzelne Leitleisten 12 (z. B. an jedem Aufhackwerkzeug 9n) in einer besonderen Weise (z. B. verschiedene Winkel und Höhen oder überlappend) zueinander angeordnet sein, so dass auch hierbei die gesamte Radialstreckung abgedeckt wird. Es ist jedoch auch möglich, mehrere einzelne Leitleisten 12 an einem Aufhackwerkzeug 9n in verschiedenen Höhen anzubringen.

Zu diesem Zweck enthält die Auflockerungseinrichtung 11 wenigstens eine, bevorzugt mehrere Leitleisten 12, die so geformt und/oder angeordnet sind, dass sie in der Lage sind, beim Drehen der Aufhackvorrichtung in Aufhack-Bewegungsrichtung D senkrecht zur Zeichnungsebene der Fig. 1 eine von innen nach außen durchgehende, horizontale, aufgelockerte Schicht im Treberkuchen zu erzeugen.

Eine Möglichkeit, dies zu erreichen, ist die Verwendung der in Fig. 2 dargestellten Querschnittsform für die Leitleiste 12. Die Leitleiste 12 besteht demnach aus einem relativ dünnen, streifenartigen Material von 3 bis 6 mm Stärke und weist einen ersten Bereich 12a und einen zweiten Bereich 12b auf. Der erste Bereich 12a wird durch den in Aufhack-Drehrichtung D nachlaufenden Randbereich der Leitleiste 12 gebildet. Der zweite Bereich 12b ist der in Drehrichtung D vorlaufende Bereich. Die beiden Bereiche 12a, 12b schließen einen stumpfen Winkel α miteinander ein. Dieser Winkel α kann kleiner als 140° gewählt werden; insbesondere kann er zwischen 140° oder 150° oder 160° und 170°, sowie insbesondere bei 165°, liegen.

Die in Drehrichtung D vorlaufende Seite des zweiten Bereiches 12b ist, bevorzugt unter einem Winkel ε von 10° bis 40°, bevorzugt 25° bis 35° und insbesondere von 30°, zur Außen-(Unter-) Seite abgeschrägt und bildet dort eine vorlaufende Kante 12c.

Außerhalb der Abschrägung, die in der Kante 12c endet, ist die Dicke der Leitleiste 12 über beide Bereiche 12a, 12b im Wesentlichen gleich und beträgt etwa 3 mm bis 6 mm. Die Breite der Leitleiste in Drehrichtung D beträgt im Randbereich 12a etwa 20 mm und im zweiten Bereich 12b bis zur Spitze 12c etwa 40 mm.

Diese Querschnittsform bewirkt, dass der Weg für die Treber auf der Oberseite der Leitleiste 12 länger ist als auf der Unterseite, d. h. die Treber werden auf der Oberseite eher beim Übergleiten der Leitleiste verlangsamt, so dass sich hinter der Leitleiste 12 Hohlräume ausbilden, in denen sich die Treber einlagern können und dadurch die erwünschte Auflockerung bewirkt wird.

Die Länge in Richtung der Längserstreckung der Leitleiste 12 kann minimal wenige Zentimeter, z. B. 5 cm und maximal die Länge des Behälterradius betragen, beträgt jedoch bevorzugt ein Mehrfaches der Summe der Breite eines Aufhackwerkzeuges 9n und des Abstandes zum benachbarten Aufhackwerkzeug 9n, so dass die Leiste 12, wenn sie im Läuterbottich 1 montiert ist, quer über mehrere Aufhackwerkzeuge 9n reicht. Die Länge der Leitleiste ist abhängig davon, über wie viele Aufhackwerkzeuge sie installiert werden soll. Beispielsweise ist die Leitleiste 10 bis 250 cm, oder 40 bis 120 cm oder 50 cm bis 100 cm lang.

Die Schmalseiten der Leitleiste 12 können entweder, wie Fig. 3 zeigt, rechtwinklig zu ihren Langseiten verlaufen oder, wie Fig. 4 zeigt, im Winkel, bevorzugt ebenfalls etwa 30°, abgeschrägt sein, wobei sich im spitzen Winkel eine Spitze 12d am Randbereich 12a ausbildet.

Die Auflockerungseinrichtung 11 kann als gesondertes Bauteil ausgebildet und zusammen mit den Aufhackarmen 8 um die Längsmittellinie 2' drehend angetrieben werden, sie ist jedoch bevorzugt an den Aufhackwerkzeugen 9n befestigt. Diese Befestigung ist in den Fig. 3 bis 5 näher erläutert.

Bevorzugt ist die Leitleiste 12 über eine Halterung 13, beispielsweise in Form von streifenförmigen Trägern, derart mit den Werkzeugen 9n verbunden, dass sich die Leitleiste 12 quer zu den Aufhackwerkzeugen 9n erstreckt und dass die Kante 12c in einem Abstand B in Drehrichtung D den Aufhackwerkzeugen 9n beim Auflockern nachläuft. Dabei wirkt die Halterung 13 als Abstandshalter, der die Leitleiste 12 so weit vom Aufhackwerkzeug entfernt hält, dass beide sich nicht gegenseitig stören. Der seitliche Überstand der Ränder zur Befestigung 13 der Leitleiste 12 sollte nicht mehr als maximal 30 cm, oder nicht mehr als 20 cm oder nicht mehr als 15 cm betragen, um den im Treberkuchen wirkenden mechanischen Kräften Stand zu halten/halten zu können. In bevorzugter Weise sollte der seitliche Überstand der Ränder etwa 5 bis 10 cm betragen.

Die Befestigung erfolgt weiterhin derart, dass die gesamte Querschnittsform der Leitleiste 12 nicht parallel zur Oberseite des Senkbodens 5 verläuft, sondern nach hinten oben ansteigt, so dass sich zwei unterschiedliche Winkel zum Senkboden 5 ergeben. Dabei bildet der zweite Bereich 12b mit der Oberfläche des Senkbodens 5 einen Winkel β, der bevorzugt 2° bis 7° und insbesondere bevorzugt 3° bis 5° beträgt. Der nach oben aufgerichtete Randbereich 12a weist einen Winkel γ zum Senkboden 5 auf, der bevorzugt zwischen 10° und 30°, insbesondere bevorzugt 13° bis 25° und noch weiter bevorzugt 18° bis 20° beträgt. Beim Winkel γ handelt es sich um den Gegenwinkel zu Winkel α. Beide Winkel zusammen ergeben in jeder beliebigen Kombination eine Winkelsumme von 180°. Der Winkel γ kann also insbesondere zwischen 30° und 40°, 10° und 20° und zu 15° gewählt werden. Durch diese Ausgestaltung wird trotz des nach oben aufgerichteten Randbereiches 12a die Bewegung der Leitleiste 12 durch die Treber nicht zu stark behindert, dass sich das befürchtete Schieben, d. h. Verdichten, des Trebers einstellt. Vielmehr wird durch die ansteigenden Schrägflächen, beginnend an der in Drehrichtung D vorderen Spitze 12c ein allmähliches Anheben des Trebers bewirkt, bis er über den Randbereich 12a nach hinten wieder herunterfällt.

Die Auflockerungseinrichtung 11 ist so angeordnet, dass ihr unterster wirksamer Punkt nicht unterhalb des bodennahen Endes oder der von den bodennahen Enden aufgespannten Ebene (E) des oder der Aufhackwerkzeuge(s) 9n liegt, sondern fluchtend mit oder oberhalb des bodennahen Endes vorgesehen ist, der Abstand A zum bodennahen Ende somit 0 oder größer ist und bevorzugt zwischen 40 mm und 120 mm und insbesondere zwischen 50 mm und 100 mm beträgt.

Bei einer schrägen Anordnung der Leitleiste 12, wie sie die Fig. 1 und 5 zeigen, reicht der Abstand A zwischen einem Mindestabstand A1, der den obigen Werten entspricht, d. h. bevorzugt zwischen 40 mm und 120 mm und insbesondere zwischen 50 mm und 100 mm beträgt, und steigt bis zu einem Maximalabstand A2 zwischen 200 mm bis 600 mm, bevorzugt 300 mm bis 500 mm über das untere, bodennahe Ende des Aufhackwerkzeuges 9n an.

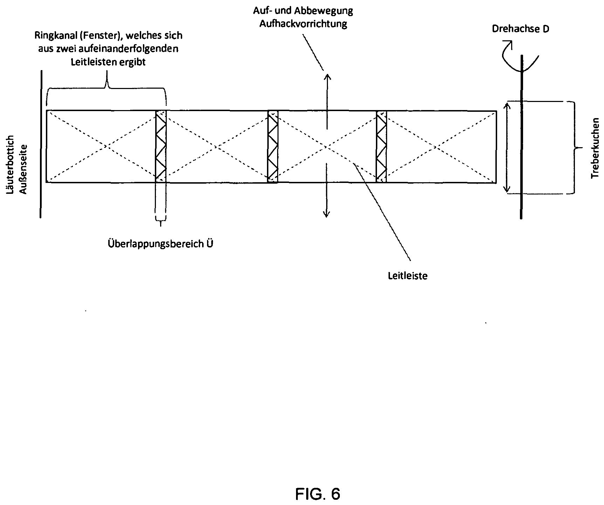

Die Leitleiste 1 wird wie Fig. 1 zeigt, unter einem Winkel δ zur Senkbodenoberfläche 5 angeordnet, der empirisch und je nach Durchmesser des Gehäuses 2 bzw. der zu erwartenden Höhe des abgelagerten Treberkuchens bestimmt werden kann. Der Winkel ö liegt bevorzugt zwischen 10° und 60°, beispielsweise zwischen 15° und 25°, beispielsweise zwischen 18° und 22°. Die Leitleisten 12 reichen dabei bevorzugt bis knapp unter die erwartete Oberfläche des Treberkuchens, können aber auch über den Treberkuchen hinausreichen. Die Auflockerungseinrichtung 11 ist mit einer Vielzahl von Leitleisten 12 bestückt, die parallel zueinander, d. h. im gleichen Winkel zum Senkboden 5 und im Abstand zueinander angeordnet sind. Der Abstand der Leitleisten 12 ist so bemessen, dass sich in Radialrichtung bezüglich der Mittellinie 2' ein Überlappungsbereich Ü zwischen einem unteren Ende einer Leitleiste 12 und dem oberen Ende der benachbarten Leitleiste 12 ergibt. Die Anzahl und der Abstand der Leitleisten zueinander ist weiterhin durch die Auflockerungswirkung der Leitleisten bestimmt, wobei die Leitleisten mit den in Fig. 2 dargestellten Querschnittsformen eine optimale Auflockerungswirkung bieten.
Aufgrund der Anordnung und Konstruktion der Aufhackvorrichtung 4 ergibt sich ein besonderes Schnittbild im Treberkuchen. Vereinfacht soll im Folgenden das Schnittbild der Leitleisten 12 gesondert betrachtet werden. Das gesamte Schnittbild, welches sich auch aufgrund der Aufhackwerkzeuge 9n und 9v ausbildet, ist aus dem Stand der Technik allgemein bekannt und soll hier nicht näher erläutert werden.
Die Leitleisten 12 sind jeweils in einem bestimmten Radius mit Abstand zur Drehachse D auf den jeweiligen Aufhackarmen 8 verteilt. Das gesamte Schnittbild der Leitleisten ergibt sich immer aus der Drehung und Auf- und Abbewegung der Aufhackvorrichtung 4. Dabei bilden zwei Leitleisten 12 auf zwei aufeinanderfolgenden Aufhackarmen 8 mit dem gleichen Radius (Abstand der Leitleisten 12 zur Drehachse D) das jeweils typische Schnittbild. In Fig. 6 wird zur Verdeutlichung eine radiale Schnittebene des Treberkuchens im zeitlichen Verlauf des Läuterprozesses betrachtet. Durch die andreaskreuzartige Anordnung der Leitleisten 12 zweier aufeinanderfolgender Aufhackarme 8 und der üblichen Auf- und Abbewegung der Aufhackvorrichtung 4 ergibt sich für jeden Radius eine Art Ringkanal, der im gesamten Treberkuchen erzeugt wird. Dieser Ringkanal bildet für den betrachteten Querschnitt ein Rechteck (Fenster) aus. Da die Leitleisten 12 leicht überlappend angeordnet sind ergibt sich aus zwei benachbarten Fenstern der Überlappungsbereich Ü. Somit wird verhindert, dass Toträume entstehen und ein Teil des Treberkuchens nicht durchfahren und bearbeitet wird.

Wie Fig. 1 zeigt, enthält jede der Gruppen 9a, 9b der Aufhackwerkzeuge 9, d. h. jeder Aufhackarm 8a, 8b, eine Vielzahl von schräg zum Senkboden 5 verlaufenden Leitleisten 12. Die Neigungsrichtung der Leitleisten 12 beider Gruppen ist jedoch entgegengesetzt. So sind die Leitleisten 12 der Gruppe 9a der Aufhackwerkzeuge 9 von außen unten nach innen oben ansteigend und die Leitleisten 12 der Gruppe 9b von innen unten nach außen oben ansteigend angeordnet. Dreht sich dann die Auflockerungseinrichtung 11 in Aufhackrichtung D, so ergeben sich andreaskreuzartige Durcharbeitungsbereiche im Treberkuchen, die für eine optimale und in Axialrichtung zur Längsmittellinie 2' sehr dicke, horizontale Auflockerungsschicht sorgen.

Dieser Effekt tritt auch dann ein, wenn zum Senkboden 5 in ihrer Längserstreckung schräg gestellte Leitleisten ohne die Querschnittsform nach Fig. 2, d. h. beispielsweise stegartige Leitleisten mit rechteckigem oder beliebig anderem Querschnitt und/oder ohne den Bodenabstand eingesetzt werden.

In Abwandlung der beschriebenen und gezeichneten Ausführungsbeispiele kann die Leitleiste gegebenenfalls auch den Aufhackwerkzeugen vorlaufend angeordnet sein. Auch kann die Auflockerungseinrichtung mit den Leitleisten als gesondertes Bauteil eingebaut sein, was besonders zum Nachrüsten zweckmäßig ist. Die Querschnittsform der Leitleiste kann abgewandelt werden; beispielsweise können die unterschiedlichen Winkelbereiche zum Senkboden dadurch erreicht werden, dass der hintere Randbereich oder die gesamte Querschnittsform nach oben gekrümmt und nicht abgewinkelt wird. Weiterhin kann die Leitleiste auch mehr als zwei Bereiche mit unterschiedlichen Neigungswinkeln oder ggf. nur einen Bereich aufweisen. Der zweite Bereich der Querschnittsform kann länger als gezeichnet oder kürzer als der Randbereich sein. Auch die Winkel können den Bedingungen im Treberkuchen und der Geschwindigkeit der Aufhackwerkzeuge angepasst werden. Als Aufhackwerkzeuge können bekannte Werkzeuge, gegebenenfalls auch mit Zusatzeinrichtungen, wie Paddeln, Flügeln oder Quermessern oder dgl., eingesetzt werden.

Durch die besondere Anordnung und Konstruktion der erfindungsgemäßen Vorrichtung ergibt sich neben der beschriebenen Auflockerung ein weiterer Vorteil beim Abläuterprozess.

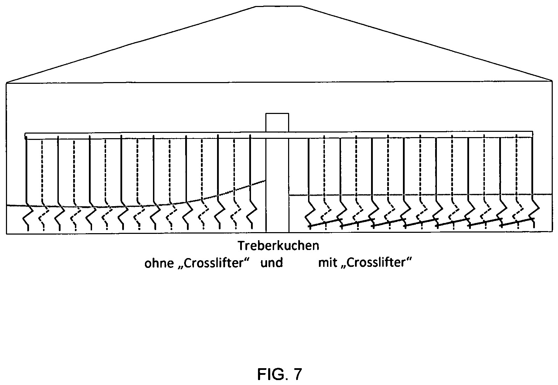

Bisher bildete sich während des gesamten Abläuterprozesses ein typisches Profil im Treberkuchen. Dieses Profil ist in Fig. 7 als Schnittdarstellung dargestellt. Je nach Größe (Durchmesser) des Läuterbottichs bzw. der Schrotzusammensetzung (Rohstoffe, Schrotung, Zerkleinerungsgrad) bildet sich ein solches Profil mehr oder weniger intensiv im Verlauf der Abläuterung aus. Bisher konnte keine Vorrichtung bzw. kein Verfahren entwickelt werden, um diese Profilbildung zu vermeiden. Ein weiterer Grund für die Ausbildung dieses Treberprofils sind möglicherweise die unterschiedlichen Geschwindigkeiten, mit denen sich die Aufhackvorrichtung 4 durch den Treberkuchen bewegt. Im äußeren Bereich des Läuterbottichs ist die Radialgeschwindigkeit der Aufhackvorrichtung 4 am größten. Die Stellgröße für die Drehgeschwindigkeit ergibt sich aus der äußeren Radialgeschwindigkeit (festgelegt). Je größer der Durchmesser des Läuterbottichs, desto kleinere Radialgeschwindigkeiten ergeben sich für den inneren Bereich des Läuterbottichs.

Durch die erfindungsgemäße Vorrichtung wird die Profilbildung des Treberkuchens nun effektiv verhindert. Die Leitleisten 12 fördern dabei nicht aktiv Treber aus dem inneren Bereich in die äußeren Bereiche des Treberkuchens. Vielmehr wird eine Förderung der äußeren Treberschichten zur Drehachse hin aktiv unterbunden. Daraus resultiert eine gleichbleibende Höhe der Treberschicht, wie aus Figur 7 ersichtlich. Eine Verdichtung des Treberkuchens (geringere Porosität) wird zusätzlich aufgrund der Auflockerungswirkung verhindert. Somit bleibt die Durchlässigkeit der natürlichen Filterschicht des Treberkuchens erhalten, was auch eine gleichbleibend hohe Abläutergeschwindigkeit zur Folge hat (gleichbleibender Läuterwürzefluss). Dass sich nicht das übliche Treberkuchenprofil ausbildet, ist besonders bei der Abläuterung der Vorderwürze von besonderer Bedeutung. Es kann also eine gleichmäßig hohe Filterschicht, sprich ein gleichbleibend hoher Treberkuchen, nach dem Abfließen der Vorderwürze bereitgestellt werden. Die darauf folgenden Nachgüsse werden somit auf den homogen-verteilten Treberkuchen aufgebracht. Dadurch wird eine gleichmäßige Auswaschung des Treberkuchens ermöglicht. Die Wassersäule, welche sich durch die Nachgüsse über dem Treberkuchen ausbildet, ist an allen Stellen gleich groß/hoch. Ein Trockenlaufen des innenliegenden Treberkuchens und damit eine Verdichtung der Filterschicht (geringere Porosität) werden verhindert. Somit bildet sich eine gleichbleibende Kolbenströmung der Nachgüsse durch den Treberkuchen aus. Die Folge davon ist eine gleichmäßige und intensive Auswaschung/Auslaugung des Treberkuchens. Die Ausbeute (Extraktgewinnung) kann mit Hilfe der vorliegenden Erfindung gesteigert werden. Die besonders homogene Auswaschung des Treberkuchens ist ein weiterer Vorteil.

## Patentansprüche

1. Läuterbottich (1) mit einer Aufhackvorrichtung (4), die wenigstens ein Aufhackwerkzeug (9) aufweist, das zur Erzeugung eines im Wesentlichen vertikalen Schnitts durch einen auf einem Boden (5) des Läuterbottichs (1) abgelagerten Treberkuchen bewegbar ist, und mit einer Auflockerungseinrichtung (11), die im Wesentlichen horizontal durch den Treberkuchen bewegbar ist, wobei die Auflockerungseinrichtung (11) mit dem bodennahen Ende des Aufhackwerkzeugs (9) abschließt oder im Abstand (A) oberhalb des bodennahen Endes des Aufhackwerkzeugs (9) angeordnet ist und wenigstens eine Treber-Leitleiste (12) aufweist, deren Querschnittsform im bezüglich der Bewegungsrichtung (D) des Aufhackwerkzeugs (9) hinteren Randbereich (12a) nach oben aufgerichtet ist;
**dadurch gekennzeichnet, dass**
die Leitleiste (12) in ihrer Längserstreckung in einem Winkel (δ) zum Senkboden (5) angeordnet ist.

2. Läuterbottich nach Anspruch 1, wobei die Querschnittsform der Leitleiste (12) mindestens einen zweiten dem Aufhackwerkzeug (9) zugewandten Bereich (12a) aufweist, wobei der Randbereich (12a) einen ersten Winkel (γ) zum Senkboden (5) und der zweite Bereich (12b) einen zweiten Winkel (β) zum Senkboden (5) aufweist, der kleiner als der Winkel (γ) des Randbereichs (12a) ist.

3. Läuterbottich nach Anspruch 2, wobei der Winkel (γ) des Randbereichs (12a) zum Senkboden (5) 10° bis 30°, bevorzugt 13° bis 25°, und insbesondere bevorzugt 18° bis 20° beträgt.

4. Läuterbottich nach Anspruch 2, wobei der Winkel (β) des zweiten Bereichs (12b) der Querschnittsform zum Senkboden (5) 2° bis 7°, bevorzugt 3° bis 5° beträgt.

5. Läuterbottich nach einem der Ansprüche 1 bis 4, wobei eine in Bewegungsrichtung (D) vorlaufende Kante (12c) der Querschnittsform von vorn unten nach hinten oben abgeschrägt ist.

6. Läuterbottich nach einem der Ansprüche 1 bis 5, wobei der Abstand (A) der Leitleiste (12) zum bodennahen Ende des Aufhackwerkzeuges (9) mindestens zwischen 0 mm bis 120 mm, insbesondere 40 bis 120 mm, und bevorzugt mindestens 50 mm bis 100 mm beträgt.

7. Läuterbottich nach einem der Ansprüche 1 bis 6, wobei die Leitleiste (12) über Abstandshalter (13) im Abstand hinter dem Aufhackwerkzeug (9) gehalten ist.

8. Läuterbottich nach einem der Ansprüche 1 bis 7, wobei eine Mehrzahl von Aufhackwerkzeugen (9) vorgesehen ist und sich die Leitleiste (12) über den Bereich der von den Aufhackwerkzeugen (9) verursachten Schnitte und den Zwischenraum zwischen benachbarten Aufhackwerkzeugen (9) erstreckt.

9. Läuterbottich nach einem der Ansprüche 1 bis 8, wobei sich die Auflockerungseinrichtung (11) über die gesamte radiale Breite der Aufhackvorrichtung (4) erstreckt.

10. Läuterbottich nach einem der Ansprüche 1 bis 9, wobei sich die Leitleiste (12) über die gesamte radiale Breite der Aufhackvorrichtung (4) erstreckt.

11. Läuterbottich nach einem der Ansprüche 1 bis 10 wobei die Auflockerungseinrichtung (11) eine Mehrzahl in einem Abstand zueinander angeordneter Leitleisten (12) aufweist.

12. Läuterbottich nach Anspruch 1, wobei die Leitleiste (12) der Auflockerungseinrichtung (11) einen Minimalabstand (A1) zum bodennahen Ende des Aufhackwerkzeugs (9) von 0 mm bis 120 mm, insbesondere von 40 bis 120 mm, und bevorzugt von 50 mm bis 100 mm und einen Maximalabstand (A2) von 200 mm bis 600 mm, bevorzugt 300 mm bis 500 mm aufweist.

13. Läuterbottich nach einem der Ansprüche 1 bis 12, wobei die Leitleisten (12) im Hinblick auf ihre Höhe über dem bodennahen Ende des Aufhackwerkzeugs (9) und/oder ihre Winkelausrichtung und/oder ihre gegenseitige Überlappung gestaffelt angeordnet sind.

14. Läuterbottich nach einem der Ansprüche 1 bis 13, wobei eine erste Gruppe (9a) von an einem ersten Aufhackarm (8a) angeordneten Aufhackwerkzeugen (9) und eine zweite Gruppe (9b) von an einem zweiten Aufhackarm (8b) angeordneten Aufhackwerkzeugen (9) vorgesehen ist, dass jedem Aufhackarm (8a, 8b) eine Auflockerungseinrichtung (11) mit wenigstens einer mit ihrer Längserstreckung in einem Winkel (ö) zum Senkboden (5) geneigten Leitleiste (12) zugeordnet ist, wobei die Neigungsrichtung der Leitleiste (12) am ersten Aufhackarm (8a) entgegengesetzt zur Neigungsrichtung der Leitleiste (12) am zweiten Aufhackarm (8b) ist.

15. Läuterbottich nach einem der Ansprüche 1 bis 14, wobei an einem Aufhackarm (8) mehrere Lenkleisten (12) derart angeordnet sind, dass sie sich in Radialrichtung in einem Überlappungsbereich (Ü) überlappen.

## Claims

1. Lauter tun (1) with a rake device (4) comprising at least one rake tool (9) that is movable through a spent grain bed deposited on the bottom (5) of said lauter tun (1) for generating a substantially vertical cut, and with a loosening appliance (11) which is movable substantially horizontally through the spent grain bed, wherein the loosening appliance (11) flushes with the end of the rake tool (9) that is close to the bottom or is disposed at a distance (A) above the end of the rake tool (9) that is close to the bottom and comprises at least one spent grain guide bar (12), the cross-sectional shape of which is directed upwards in the rim region (12a) that is at the rear with respect to the direction of motion (D) of the rake tool (9);
**characterized in that** the guide bar (12) is arranged in its longitudinal direction at an angle (δ) with respect to the false bottom (5).

2. Lauter tun according to claim 1, wherein the cross-sectional shape of the guide bar (9) comprises at least one second region (12a) facing the rake tool (9), the rim region (12a) having a first angle (γ) with respect to the false bottom (5), and the second region (12b) having a second angle (β) with respect to the false bottom (5) which is smaller than the angle (γ) of the rim region (12a).

3. Lauter tun according to claim 2, wherein the angle (γ) of the rim region (12a) with respect to the false bottom (5) is 10° to 30°, preferably 13° to 25°, and particularly preferred 18° to 20°.

4. Lauter tun according to claim 2, wherein the angle (β) of the second region (12b) of the cross-sectional shape with respect to the false bottom (5) is 2° to 7°, preferably 3° to 5°.

5. Lauter tun according to one of claims 1 to 4, wherein a rim (12c) of the cross-sectional shape that is advancing in the direction of motion (D) is chamfered from the front bottom to the rear top.

6. Lauter tun according to one of claims 1 to 5, wherein the distance (A) of the guide bar (12) to the end of the rake tool (9) that is close to the bottom is at least between 0 mm to 120 mm, in particular 40 to 120 mm, and preferably at least 50 mm to 100 mm.

7. Lauter tun according to one of claims 1 to 6, wherein the guide bar (12) is retained at a distance behind the rake tool (9) by spacers (13).

8. Lauter tun according to one of claims 1 to 7, wherein a plurality of rake tools (9) is provided and the guide bar (12) extends across the region of the cuts caused by the rake tools (9) and the space between adjacent rake tools (9).

9. Lauter tun according to one of claims 1 to 8, wherein the loosening appliance (11) extends across the total radial width of the rake device (4).

10. Lauter tun according to one of claims 1 to 9, wherein the guide bar (12) extends across the total radial width of the rake device (4).

11. Lauter tun according to one of claims 1 to 10, wherein the loosening appliance (11) comprises a plurality of guide bars (12) arranged at a distance with respect to each other.

12. Lauter tun according to claim 1, wherein the guide bar (12) of the loosening appliance (11) has a minimum distance (A1) to the end of the rake tool (9) that is close to the bottom of 0 mm to 120 mm, in particular of 40 to 120 mm, and preferably of 50 mm to 100 mm, and has a maximum distance (A2) of 200 mm to 600 mm, preferably 300 mm to 500 mm.

13. Lauter tun according to one of claims 1 to 12, wherein the guide bars (12) are arranged in staggered arrangement with respect to their height above the end of the rake tool (9) that is close to the bottom and/or to their angular orientation and/or to their mutual overlap.

14. Lauter tun according to one of claims 1 to 13, wherein a first group (9a) of rake tools (9) arranged at a first rake arm (8a), and a second group (9b) of rake tools (9) arranged at a second rake arm (8b) are provided such that a loosening appliance (11) with at least one guide bar (12) inclined in its longitudinal direction at an angle (δ) with respect to the false bottom (5) is associated with each rake arm (8a, 8b), the direction of inclination of the guide bar (12) at the first rake arm (8a) being opposed to the direction of inclination of the guide bar (12) at the second rake arm (8b).

15. Lauter tun according to one of claims 1 to 14, wherein several guide bars (12) are arranged at a rake arm (8), such that they overlap in the radial direction in an overlap region (Ü).

## Revendications

1. Cuve de clarification (1) dotée d'un dispositif de binage (4) qui comporte au moins un outil de binage (9) pouvant être déplacé à travers un gâteau de drêches déposé sur un fond (5) de la cuve de clarification (1) afin de pratiquer une coupe sensiblement verticale, et dotée d'un dispositif de décompactage (11) pouvant être déplacé à travers le gâteau de drêches dans une direction sensiblement horizontale, dans laquelle le dispositif de décompactage (11) se termine au niveau de l'extrémité de l'outil de binage (9) située à proximité du fond ou est disposé à distance (A) au-dessus de l'extrémité de l'outil de binage (9) située à proximité du fond, et est pourvu d'au moins une barre (12) de guidage des drêches dont la section transversale présente, dans la zone du bord postérieur (12a) par rapport au sens de déplacement (D) de l'outil de binage (9), une forme dressée vers le haut ;
**caractérisée en ce que** la barre de guidage (12) est agencée, dans son étendue longitudinale, selon un angle (δ) par rapport au faux-fond (5).

2. Cuve de clarification selon la revendication 1, dans laquelle la section transversale de la barre de guidage (12) a une forme présentant au moins une seconde zone (12b), tournée vers l'outil de binage (9), la zone de bord (12a) formant un premier angle (γ) par rapport au faux-fond (5) et la seconde zone (12b) formant par rapport au faux-fond (5) un second angle (β) qui est inférieur à l'angle (γ) de la zone de bord (12a).

3. Cuve de clarification selon la revendication 2, dans laquelle l'angle (γ) de la zone de bord (12a) par rapport au faux-fond (5) mesure de 10° à 30°, de préférence de 13° à 25° et, notamment, de préférence de 18° à 20°.

4. Cuve de clarification selon la revendication 2, dans laquelle l'angle (β) de la seconde zone (12b) de la forme de la section transversale par rapport au faux-fond (5) mesure de 2° à 7°, de préférence de 3° à 5°.

5. Cuve de clarification selon l'une des revendications 1 à 4, dans laquelle une arête (12c) de la forme de la section transversale, antérieure dans la direction de déplacement (D), est biseautée de l'avant et du bas vers l'arrière et vers le haut.

6. Cuve de clarification selon l'une des revendications 1 à 5, dans laquelle la distance (A) de la barre de guidage (12) par rapport à l'extrémité de l'outil de binage (9) située à proximité du fond est au moins comprise entre 0 mm et 120 mm, notamment entre 40 mm et 120 mm et, de préférence, au moins entre 50 mm et 100 mm.

7. Cuve de clarification selon l'une des revendications 1 à 6, dans laquelle la barre de guidage (12) est maintenue à distance derrière l'outil de binage (9) par des entretoises (13).

8. Cuve de clarification selon l'une des revendications 1 à 7, dans laquelle il est prévu une pluralité d'outils de binage (9) et la barre de guidage (12) s'étend sur la zone des coupes pratiquées par les outils de binage (9) et l'espace intermédiaire entre des outils de binage (9) contigus.

9. Cuve de clarification selon l'une des revendications 1 à 8, dans laquelle le dispositif de décompactage (11) s'étend sur l'ensemble de la largeur radiale du dispositif de binage (4).

10. Cuve de clarification selon l'une des revendications 1 à 9, dans laquelle la barre de guidage (12) s'étend sur toute la largeur radiale du dispositif de binage (4).

11. Cuve de clarification selon l'une des revendications 1 à 10, dans laquelle le dispositif de décompactage (11) comporte une pluralité de barres de guidage (12) situées à une distance les unes des autres.

12. Cuve de clarification selon la revendication 1, dans laquelle la barre de guidage (12) du dispositif de décompactage (11) présente, par rapport à l'extrémité de l'outil de binage (9) située à proximité du fond, une distance minimale (A1) comprise entre 0 mm et 120 mm, notamment entre 40 mm et 120 mm, et de préférence entre 50 mm et 100 mm, et une distance maximale (A2) comprise entre 200 mm et 600 mm, de préférence entre 300 mm et 500 mm.

13. Cuve de clarification selon l'une des revendications 1 à 12, dans laquelle les barres de guidage (12) sont agencées de façon à présenter un échelonnement quant à leur hauteur par rapport à l'extrémité de l'outil de binage (9) située à proximité du fond et/ou leur orientation angulaire et/ou leur chevauchement mutuel.

14. Cuve de clarification selon l'une des revendications 1 à 13, dans laquelle il est prévu un premier groupe (9a) d'outils de binage (9) disposés sur un premier bras de binage (8a) et un second groupe (9b) d'outils de binage (9) disposés sur un second bras de binage (8b), de façon qu'à chaque bras de binage (8a, 8b) soit associé un dispositif de décompactage (11) comportant au moins une barre de guidage (12) inclinée, dans son étendue longitudinale, selon un angle (δ) par rapport au faux-fond (5), la direction d'inclinaison de la barre de guidage (12) sur le premier bras de binage (8a) étant opposée à la direction d'inclinaison de la barre de guidage (12) sur le second bras de binage (8b).

15. Cuve de clarification selon l'une des revendications 1 à 14, dans laquelle, sur un bras de binage (8), plusieurs barres de guidage (12) sont agencées de façon à se chevaucher, dans la direction radiale, dans une zone de chevauchement (Ü).
